Europäisches Patentamt

European Patent Office

Office européen des brevets

(11) Publication number: **0 197 714 B1**

# EUROPEAN PATENT SPECIFICATION

(45) Date of publication of patent specification: **08.07.92** (51) Int. Cl.⁵: **C09K 3/22**

(21) Application number: **86302277.8**

(22) Date of filing: **26.03.86**

(54) Method for the control of dust.

(30) Priority: **29.03.85 US 717778**

(43) Date of publication of application:
**15.10.86 Bulletin 86/42**

(45) Publication of the grant of the patent:
**08.07.92 Bulletin 92/28**

(84) Designated Contracting States:
**AT BE CH DE FR GB IT LI LU NL SE**

(56) References cited:
**EP-A- 0 134 106**
**US-A- 3 900 611**
**US-A- 4 469 612**

(73) Proprietor: **CALGON CORPORATION**
**Route 60-Campbell's Run Road**
**Robinson Township Pennsylvania 15205(US)**

(72) Inventor: **Kirwin, Ross C.**
**621 Newton Square**
**Coraopolis, PA 15108(US)**

(74) Representative: **Crampton, Keith John Allen et al**
**D. YOUNG & CO. 10 Staple Inn**
**London WC1V 7RD(GB)**

## Description

This invention relates to dust suppression. More particularly, but not exclusively, it relates to dust suppression in mining applications.

The term "dust suppression", as used herein, means the prevention or reduction of the extent to which fine particles become airborne or suspended in air. Dust is generated in significant quantities during the mining, handling, transportation, and storage of coal and coal refuse; dust is also generated during the processing, transportation and handling of such materials as rock, ores (for example iron ore), grains, taconite, sulphur, copper, limestone, gypsum, fly ash, cement, coke, ash, sinter, bauxite, mineral concentrates and fertilizers (such as potash and phosphates). Road dust is also a problem.

In mining applications, mechanical and chemical methods for dust control are known. For example, dust collection equipment is used in mining operations. Also, water is commonly used to prevent dust particles from becoming airborne. Additionally, aqueous solutions containing surfactants may be used for dust control (see U.S.Patents US-A-3,690,727 and US-A-4,136,050). Aqueous foam compositions have also been used to suppress dust (see U.S. Patents US-A-3,954,662, US-A-4,000,992 and US-A-4,400,220). U.S. Patent US-A-4,316,811 discloses the use of an aqueous solution of polyethylene oxide for dust control. U.S. Patent US-A-4,169,170 discloses the use of an aqueous composition comprising an asphalt emulsion or a black liquor lignin product and a water-soluble methoxylated alkylphenol or sulphosuccinate wetting agent to form a crust layer, which provides protection against the loss of coal due to wind or the action of a coal-transportation device.

U.S. Patent US-A-3,900,611 discloses suppression of dust by application of an aqueous solution containing a non-irritant surfactant and a polymer. The surfactant is an amphoteric surfactant, either alone or in combination with an anionic surfactant. The polymer is preferably polyacrylamide or hydrolysed quaternised polyacrylamide. European Patent Specification EP-A-0,134,106 discloses concentrates and compositions useful for enhancing the geotechnical properties of soil materials so as to control soil erosion and fugitive dust in both quiescent areas and road beds and comprising in admixture, homo- or copolymers of acrylic acids or salts thereof, polybasic acids or salts thereof, water, and optionally a wetting agent. U.S. Patent US-A-4,469,612 discloses agglomeration of mineral-derived fines by contact with a polymeric material that is a homopolymer or salt of homopolymer of acrylic acid or methacrylic acid, a copolymer or salt of copolymer of acrylic acid with methacrylic acid, or a copolymer or salt of copolymer of one or more monomers of acrylic acid and methacrylic acid together with one or more of acrylamide, methacrylamide, acrylonitrile, methacrylonitrile, styrene, N,N-dimethylacrylamide, vinyl acetate, and monomers having the structural formula

$$CH_2 = C(R_1) - COOR_2$$

where $R_1$ is hydrogen or methyl and $R_2$ is alkyl, alkoxyalkyl, hydroxyalkyl or aminoalkyl.

It has now been found that certain methacrylate polymers provide efficient dust control when applied to any of a wide variety of materials. The present invention provides a method of suppressing dust comprising contacting a dust-producing material with at least one methacrylate polymer, which is applied as an aqueous emulsion containing 0.1-50% by weight active polymer or as a hydrophobic liquid/polymer composition containing 0.1-30% by weight active polymer, in which the polymer is a homopolymer of methyl methacrylate, ethyl methacrylate, propyl methacrylate, butyl methacrylate, pentyl methacrylate, hexyl methacrylate, heptyl methacrylate, octyl methacrylate, nonyl methacrylate, decyl methacrylate, 2-ethylbutyl methacrylate, or ethylhexyl methacrylate, including all isomers, and is added at a dosage of at least 0.001 lb/square yard ($0.54 g/m^2$) for surface treatment or 0.001 lb (0.45 g) per metric ton (Mg) for treatment on a weight basis. The preferred dosages range from 0.01 to 10 lb of active polymer per square yard ($5.4 g/m^2$ to 5.4 $Kg/m^2$) for surface treatment, especially 0.1 to 5 lb per square yard ($54 g/m^2$ to 2.7 $Kg/m^2$), and 0.01 lb (4.5 g) to 10 lb (4.5 Kg) per metric ton (Mg) for treatment on a weight basis, especially 45g to 2.25 kg per Mg.

After application, the methacrylate polymers provide a tacky, water-resistant coating which effectively prevents dusting while additionally acting as an antifreeze agent. Compositions used in the process of the present invention, such as the preferred compositions described below, provide excellent dust suppression relative to known dust-suppression formulations.

The especially preferred methacrylates are homopolymers of 2-ethylhexyl methacrylate.

The molecular weight of the methacrylate is not critical. However, it is preferred that the methacrylate have a molecular weight in excess of 2,000, as determined by light-scattering techniques.

Any product form can be used. A preferred product form is an aqueous emulsion of poly (2-ethylhexyl methacrylate) containing 35-40% active polymer. Such a product is commercially available from Calgon Corporation as DCL-1803.

Compositions comprising at least one methacrylate polymer and at least one hydrophobic liquid can also be used in the process of the present invention. These compositions may contain 0.1 to 30% by weight of at least one methacrylate polymer, the balance being at least one hydrophobic liquid. Preferably, these compositions contain 1-10% by weight of at least one methacrylate polymer, the balance being at least one hydrophobic liquid. A preferred product form is a composition comprising a hydrophobic liquid, such as kerosene, and poly 2-ethylhexyl methacrylate. Such a product is commercially available from Calgon as DCL-1811

The term "hydrophobic liquid", as used herein, means a liquid that is not miscible with water. The preferred hydrophobic liquids are mineral oils, fuel oils, diesel fuels or oils, kerosene, naphthas, petroleums, and blends of aromatic and aliphatic hydrocarbons containing four or more carbon atoms in the molecule, alone or in combination. The especially preferred hydrophobic liquids are fuel oils, diesel fuels or oils, kerosene, and mixtures of these hydrophobic liquids. Methacrylate polymers are usually soluble in such hydrophobic liquids as fuel oils, diesel fuels or oils and kerosene.

Blends of methacrylates can be used, as can blends of various hydrophobic liquids. For example, a composition comprising a methacrylate polymer and kerosene may be prepared. The kerosene improves the viscosity properties of the methacrylate polymer. This composition may be further diluted with a second hydrophobic liquid, including but not limited to hydrophobic liquids ranging from diesel fuel to number 5 fuel oil, alone or in combination. The second hydrophobic liquid is preferably heavier and more viscous than the kerosene, thereby promoting better binding of the fine dust particles. The weight ratio of kerosene to heavy second oil ratio can range from 1:20 to 20:1, preferably 1:10 to 10:1 and particularly 1:6 to 1:1.

Aqueous methacrylate polymer emulsions can also be used. Such emulsions may be prepared by conventional emulsion polymerization techniques using emulsifying surfactants. Typically, such emulsion polymerization techniques yield polymer-in-water emulsions which contain 0.1-50% and preferably 20-40% by weight polymer solids. These emulsions can be applied to dust-producing materials neat or they can be diluted.

The aqueous polymer emulsions and the hydrophobic liquid/polymer compositions used in the invention may additionally comprise nonionic or anionic surfactants as wetting/penetration aids. Preferred nonionic surfactants have high HLB (hydrophile-lipophile balance) numbers, i.e. HLB values greater than or equal to 8.0. High HLB values indicate that these surfactants are strongly hydrophilic. The preferred nonionic and anionic surfactants also have good wetting, binding and penetration characteristics.

The preferred emulsifying surfactants are (1) nonionic surfactants having an HLB value greater than 8.0, such as polyoxyethylene ethoxylates, polyethylene glycol ethers, alcohol ethoxylates, and alkyl phenyl ethoxylates; and (2) anionic surfactants such as phosphate ester-containing surfactants, sulphosuccinates, alkyl sulphates, ethoxylated alkyl phenol sulphates, alkyl ether sulphates, fatty ester sulphates, sulphated alcohol ethoxylates, and their salts. Especially preferred are polyethylene glycol ethers of linear alcohols, alkyl phenol ethoxylates, phosphate ester-containing surfactants, alkyl ether sulphates and sulphosuccinates, and their salts, e.g. sodium and potassium salts. Preferred examples of polyethylene glycol ethers of linear alcohols include, but are not limited to, those sold under the trade marks Tergitol 15S-5, Tergitol 15S-7 and Tergitol 15S-9, all of which are available from Union Carbide Corporation, and which have 5,7 and 9 moles EO and approximate HLB values of 10.5, 12.1 and 13.3, respectively.

A preferred alkyl phenol ethoxylate is an ethoxylated octyl phenol (degree of ethoxylation, n = 10) having an HLB value of approximately 13.5. A preferred example of a phosphate ester-containing surfactant is sold under the trade mark Gafac RS-610, which is described as a phosphate ester free acid with an aliphatic hydrophobic base, which is available from GAF Corporation. Preferred alkyl ether sulphates are sodium salts of alkyl ether sulphates.

Preferred examples of sulphosuccinates include sodium dioctyl sulphosuccinate, such as that sold under the trade mark Aerosol OT-75, disodium ethoxylated alcohol hemi-ester of sulphosuccinic acid, such as that solid under the trade mark Aerosol A-102, and disodium ethoxylated nonylphenol hemi-ester of sulphosuccinic acid, such as that sold under the trade mark Aerosol A-103, all available from American Cyanamid Company. Combinations of surfactants may also be used.

The amount of the surfactant is that necessary to provide the aqueous emulsions and hydrophobic liquid compositions with improved wetting/penetrating/binding qualities. The preferred polymer/surfactant weight ratio is 0.05:1 to 5:1, especially 0.5:1 to 2:1, based on active polymer.

The polymer/hydrophobic liquid compositions can be formulated using any of several known technologies; for example, they may be prepared using agitated mix tanks.

The dust suppressant compositions and aqueous emulsions are suitable for use on any material prone to create dust, including coal, coal refuse, rock, ores (such as iron ore), taconite, sulphur, copper, limestone, gypsum, fly ash, cement, bauxite, ash, sinter, coke, mineral concentrates and fertilizers, e.g. potash and phosphate fertilizers. These aqueous emulsions and compositions are also excellent agents for the control of road dust.

The method of the invention is especially effective for use with coal where the composition is applied by any commonly known techniques, including spraying or otherwise contacting the coal with the dust suppressants. Spraying is preferred. The present method of coal dust suppression involves contacting the coal being treated with the dust-suppressant composition. Preferably, all of coal being treated, and not only its surface, such as the surface area of a pile of coal or the coal in a railway waggon, is contacted with the emulsion. Thus, a preferred method of treating coal is to spray the coal with the composition while loading it into a transportation device, such as a railway waggon, lorry or conveying system. However, surface spraying can also be used. The present invention minimizes or eliminates dusting of the coal during transport and subsequent handling, while additionally protecting against freezing and possibly enhancing the BTU value of the coal. Dust suppression is excellent owing to the persistence of the aqueous emulsions and hydrophobic liquid compositions, and to their ability to agglomerate and bind fine coal particles, i.e. those less than 10 $\mu$m in diameter, to more coarse coal.

Additionally, the compositions can be used to treat mine tunnels and mining faces, especially coal mine tunnels and faces. Thus, the composition is sprayed onto the tunnel surface or the mining face at the above-described surface dosage. This treatment may then be followed by dry addition of rock dust, such as limestone dust, or a salt such as $MgCO_3$, $Mg(OH)_2$ or other forms of $CaCO_3$. The emulsion or composition holds the dust or salt in place, which then minimizes dusting of the tunnel surface or mining surface so treated. $MgCO_3$, $Mg(OH)_2$ or $CaCO_3$ can also be added directly to the compositions for one-step treatment.

The following examples further illustrate but do not limit the invention.

EXAMPLE 1: Use of aqueous polymer emulsion as rock dust binding agent.

Calgon DCL-1803 (aqueous emulsion of 2-ethylhexyl methacrylate containing approximately 37.5%, by weight, active polymer) was diluted with water to produce concentrations of 25%, 50%, and 75% by weight DCL-1803 in water. These diluted formulations, and undiluted DCL-1803, were applied to the walls of a coal mine at a dosage of 1 U.S. gal/450 ft$^2$ (90 cc/m$^2$). Rock dust was then applied to the treated surface, either by hand (100% and 50% concentrations) or by machine (75% and 25% concentrations). The combined DCL-1803/rock dust treatment provided excellent dust control on the mine surfaces so treated, compared to the conventional use of rock dust alone. The length of time between applications of rock dust (with and without polymer pretreatment) increased from 10-14 days to approximately 3 months, thereby greatly reducing the cost of the dust control programme and the manpower necessary to implement it.

EXAMPLE 2

DCL-1803 was diluted to a 0.5%, by weight, solution using water. The diluted product was then applied to coal dust-covered surfaces at a dosage of 1000 U.S. gal/acre (935 cc/m$^2$). The diluted DCL-1803 effectively inhibited dusting and showed significant improvement over conventional $MgCl_2$ treatment.

**Claims**

1. A method of suppressing dust comprising contacting a dust-producing material with at least one methacrylate polymer, which is applied as an aqueous emulsion containing 0.1-50% by weight active polymer or as a hydrophobic liquid/polymer composition containing 0.1-30% by weight active polymer, in which the polymer is a homopolymer of methyl methacrylate, ethyl methacrylate, propyl methacrylate, butyl methacrylate, pentyl methacrylate, hexyl methacrylate, heptyl methacrylate, octyl methacrylate, nonyl methacrylate, decyl methacrylate, 2-ethylbutyl methacrylate, or ethylhexyl methacrylate, including all isomers, and is added at a dosage of at least 0.001 lb/square yard (0.54 g/m$^2$) for surface treatment or 0.001 lb (0.45 g) per metric ton (Mg) for treatment on a weight basis.

2. A method as claimed in Claim 1 in which the dust-producing material is coal, rock, an ore, grains, taconite, sulphur, copper, limestone, gypsum, fly ash, cement, ash, sinter, coke, bauxite, a mineral concentrate, a fertilizer or road dust.

3. A method as claimed in Claim 1 or 2 in which the methacrylate polymer is poly-(2-ethylhexyl methacrylate).

4. A method as claimed in any one of Claims 1 to 3 in which the methacrylate polymer is applied as an aqueous emulsion.

**5.** A method as claimed in Claim 4 in which the aqueous emulsion further comprises a wetting/penetrating surfactant that is a nonionic surfactant having an HLB value greater than 8.0 or an anionic surfactant that is a sulphosuccinate, alkyl sulphate, ethoxylated alkyl phenol sulphate, fatty ester sulphate or alcohol ethoxylate, or a salt thereof.

**6.** A method as claimed in Claim 4 or 5, additionally comprising the step of adding rock dust to the polymer-treated surface of a mining tunnel or mining surface.

**7.** A method as claimed in any one of Claims 1 to 3 in which the methacrylate polymer is applied as a hydrophobic liquid/polymer composition.

**8.** A method as claimed in Claim 7 in which the hydrophobic liquid/polymer composition further comprises a wetting/penetrating surfactant as defined in Claim 5.

**9.** A method as claimed in Claim 7 or 8 in which the hydrophobic liquid is a mineral oil, a diesel fuel or oil, kerosene, a naphtha, petroleum or a blend of aromatic and aliphatic hydrocarbons containing four or more carbon atoms in the molecule.

**Revendications**

**1.** Procédé de dépoussiérage, qui consiste à mettre en contact une matière produisant de la poussière avec au moins un polymère de méthacrylate qu'on applique sous forme d'une émulsion aqueuse contenant de 0,1 à 50 % en poids de polymère actif ou d'une composition de liquide hydrophobe et de polymère contenant de 0,1 à 30 % en poids de polymère actif, dans laquelle le polymère est un homopolymère de méthacrylate de méthyle, méthacrylate d'éthyle, méthacrylate de propyle, méthacrylate de butyle, méthacrylate de pentyle, méthacrylate d'hexyle, méthacrylate d'heptyle, méthacrylate d'octyle, méthacrylate de nonyle, méthacrylate de décyle, méthacrylate de 2-éthylbutyle ou méthacrylate d'éthylhexyle, y compris tous les isomères, et on l'ajoute en un dosage d'au moins 0,54 g/m$^2$ (0,001 lb/yd$^2$) pour un traitement de surface ou de 0,45 g (0,001 lb) par tonne métrique (Mg) pour le traitement sur une base pondérale.

**2.** Procédé selon la revendication 1, dans lequel la matière produisant la poussière est la houille, la roche, un minerai, des graines, la taconite, le soufre, le cuivre, la pierre à chaux, le gypse, la soude carbonatée, le ciment, les cendres, le calcaire, le coke, la bauxite, un concentré minéral, un engrais ou la poussière de la route.

**3.** Procédé selon la revendication 1 ou 2, dans lequel le polymère de méthacrylate est le poly(méthacrylate de 2-éthylhexyle).

**4.** Procédé selon l'une quelconque des revendications 1 à 3, dans lequel on applique le polymère de méthacrylate sous forme d'une émulsion aqueuse.

**5.** Procédé selon la revendication 4, dans lequel l'émulsion aqueuse comprend en outre un agent tensio-actif de mouillage et pénétration qui est un tensio-actif non ionique ayant un I.A de plus de 8,0 ou un tensio-actif anionique qui est un sulfosuccinate, un alkylsulfate, un alkylphénolsulfate éthoxylé, un sulfate gras ou un alcool éthoxylé ou un sel de celui-ci.

**6.** Procédé selon la revendication 4 ou 5, qui consiste en outre à ajouter de la poussière de roche à la surface traitée par le polymère d'un tunnel de mine ou d'un front de mine.

**7.** Procédé selon l'une quelconque des revendications 1 à 3, dans lequel on applique le polymère de méthacrylate sous forme d'une composition liquide hydrophobe/polymère.

**8.** Procédé selon la revendication 7, dans lequel la composition liquide hydrophobe/polymère comprend en outre un tensio-actif mouillant ou de pénétration tel que défini dans la revendication 5.

**9.** Procédé selon la revendication 7 ou 8, dans lequel le liquide hydrophobe est une huile minérale, un combustible ou huile diesel, un pétrole lampant, un naphta, un pétrole ou un mélange d'hydrocarbures aromatiques et aliphatiques contenant dans la molécule 4 atomes de carbone ou plus.

**Patentansprüche**

**1.** Verfahren zur Staubunterdrückung, umfassend das In-Kontakt-Bringen eines stauberzeugenden Materials mit mindestens einem Methacrylatpolymer, welches als eine wäßrige Emulsion, die 0,1-50 Gew.-% an wirksamen Polymer enthält, oder als eine Zusammensetzung aus hydrophober Flüssigkeit/Polymer, welche 0,1-30 Gew.-% an wirksamem Polymer enthält, angewandt wird, worin das Polymer ein Homopolymer aus Methylmethacrylat, Ethylmethacrylat, Propylmethacrylat, Butylmethacrylat, Pentylmethacrylat, Hexylmethacrylat, Heptylmethacrylat, Octylmethacrylat, Nonylmethacrylat, Decylmethacrylat, 2-Ethylbutylmethacrylat oder Ethylhexylmethacrylat, einschließlich aller Isomeren, ist und in einer Dosierung von mindestens 0,001 lb/square yard (0,54 g/m$^2$) zur Oberflächenbehandlung oder von 0,001 lb (0,45 g) je metrischer Tonne (Mg) für die Behandlung auf einer Gewichtsbasis, zugesetzt wird.

2. Verfahren nach Anspruch 1, worin das stauberzeugende Material Kohle, Gestein, ein Erz, Körner, Taconit, Schwefel, Kupfer, Kalkstein, Gips, Flugasche, Zement, Asche, Sinter, Koks, Bauxit, ein mineralisches Konzentrat, ein Düngemittel oder Straßenstaub ist/sind.

3. Verfahren nach Anspruch 1 oder 2, worin das Methacrylatpolymer Poly-(2-ethyhexyl-methacrylat) ist.

4. Verfahren nach einem der Ansprüche 1 bis 3, worin das Methacrylatpolymer als eine wäßrige Emulsion verwendet wird.

5. Verfahren nach Anspruch 4, worin die wäßrige Emulsion ferner ein benetzendes/durchdringendes grenzflächenaktives Mittel umfaßt, welches ein nichtionisches grenzflächenaktives Mittel mit einem HLB-Wert größer als 8,0 oder ein anionisches grenzflächenaktives Mittel, welches ein Sulfosuccinat, Alkylsulfat, ethoxyliertes Alkylphenolsulfat, Fettestersulfat oder Alkoholethoxylat, oder ein Salz hievon ist.

6. Verfahren nach Anspruch 4 oder 5, welches zusätzlich den Schritt des Zusetzens von Gesteinsstaub auf die Polymer-behandelte Oberfläche eines Bergbautunnels oder einer Bergbauoberfläche umfaßt.

7. Verfahren nach einem der Ansprüche 1 bis 3, worin das Methacrylatpolymer als eine Zusammensetzung aus einer hydrophoben Flüssigkeit und Polymer verwandet wird.

8. Verfahren nach Anspruch 7, worin die Zusammensetzung aus hydrophober Flüssigkeit und Polymer ferner ein benetzendes/durchdringendes grenzflächenaktives Mittel, wie es in Anspruch 5 definiert ist, umfaßt.

9. Verfahren nach Anspruch 7 oder 8, worin die hydrophobe Flüssigkeit ein Mineralöl, ein Dieselkraftstoff oder -öl, Kerosin, Naphtha, Erdöl oder ein Gemisch aus aromatischen und aliphatischen Kohlenwasserstoffen mit vier oder mehr Kohlenstoffatomen im Molekül ist.